Europäisches Patentamt

European Patent Office

Office européen des brevets

(19)

(11) Publication number: **0 259 478 B1**

(12) **EUROPEAN PATENT SPECIFICATION**

(45) Date of publication of patent specification: **28.10.92**     (51) Int. Cl.⁵: **B25F  3/00**

(21) Application number: **87902213.5**

(22) Date of filing: **25.02.87**

(86) International application number:
**PCT/US87/00443**

(87) International publication number:
**WO 87/04966 (27.08.87 87/19)**

(54) **SELF-STERILIZING PRUNING SHEARS.**

(30) Priority: **25.02.86 US 832635**

(43) Date of publication of application:
**16.03.88 Bulletin  88/11**

(45) Publication of the grant of the patent:
**28.10.92 Bulletin  92/44**

(84) Designated Contracting States:
**AT BE CH DE FR GB IT LI LU NL SE**

(56) References cited:
**DE-C- 1 012 107      IT-A- 616 057**
**US-A- 2 747 330      US-A- 2 870 573**
**US-A- 4 219 963      US-A- 4 519 908**

(73) Proprietor: **BLOOMLAND NURSERIES**
**Box 216 Route 4**
**Chatsworth, GA 30705(US)**

(72) Inventor: **BLOOM, Walter, L.**
**3131 Slaton Drive**
**Atlanta, GA 30305(US)**
Inventor: **VAUGHN, Harry, L.**
**3482 Sweetwater Drive**
**Lawrenceville, GA 30245(US)**

(74) Representative: **Hepworth, John Malcolm**
**J.M. Hepworth & Co. 36 Regent Place**
**Rugby Warwickshire CV21 2PN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 259 478 B1

## Description

This invention relates generally to pruning devices and more particularly to cutting implements for cutting plants with a dispensing mechanism to sterilize the blades and plant during the pruning process, as defined in the pre-characterising portion of Claim 1.

A cutting implement of conventional type according to the pre-characterising portion of Claim 1 is, for example, known from DE-C-1 012 107.

One of the problems associated with nursery operations that grow plants which need periodic pruning is that plant diseases are frequently transmitted through the pruning operation. Many times, the plant diseases are transmitted from plant to plant before it is apparent that one of the plants is diseased.

### BACKGROUND ART

Various techniques have been used in the past in an attempt to sterilize the pruning implement being used between cuts and/or apply sterilizing solutions to the pruning cut made on each plant. One technique is to simply carry a container in which the pruning implement is dunked after each cut is made. Another technique used with pneumatic pruning shears is to spray a sterilizing solution onto the pruning blades and plant after the cut is made. One of the problems with dunking the pruning implement after each cut is that it is cumbersome to use and tiring on the operator. One of the problems with the spraying device is that it is difficult to always ensure adequate coverage of both the blades and the plant being pruned since the remaining side of the cut on the plant may dramatically shift after the pruning cut is made. Also it is difficult to obtain a sufficiently uniform spray pattern to ensure complete coverage within the spray itself. Sprays from the spray device are difficult to control and may result in over-spray getting onto some portions of the cutting implement and plant that might damage same.

DE-C-1 012 107 discloses a pruning shear which uses a hydraulic pump to deliver sterilizing fluid to the vicinity of the blades incorporated in the shears. The pump is an integral part of the pruning shears which is situated between the handles thereof and a pump action is achieved by compressing the shear handles about their mutual pivot point. The fluid is therefore delivered by this pump action, the flow is controlled using a screw, remote from the pump, which limits the extent of relative movement of the handles. DE-C-1 012 107 also provides a porous material adjacent the blades in one particular embodiment. In this embodiment the porous medium acts as a sponge so that when a stem is cut using the pruning shears fluid is delivered to the stem directly from the porous medium.

### SUMMARY OF THE INVENTION

These and other problems and disadvantages associated with the prior art are overcome by the invention disclosed herein by providing a pruning implement in which the sterilizing solution is applied to both the cutting blades and the cut in the plant by maintaining a thin coating of the sterilizing solution on the blades themselves. The sterilizing solution is uniformly distributed along the length of the cutting edges of the blades with a sufficient quantity of sterilizing solution maintained thereon to coat the sides of the cut on the plant. This results not only in a marked saving of sterilizing solution but also coats only those portions of the cutting implement and the plant which need to be sterilized after each cut. The invention is also fabricated as a single unit to facilitate handling.

The apparatus of the invention includes a distributor which extends along one of the cutting blades at a point that causes the liquid flowing therefrom to coat the surface of the cutting blade and maintain the coating thereon. A solution supply assembly is provided which supplies the sterilizing solution to the distributing assembly at a controlled rate for distribution onto the cutting blades at a selected rate. The supply assembly may provide the sterilizing solution under the influence of gravity where the cutting implement is to be used at a level below the supply assembly or may be pressurized to supply the sterilizing solution to the distribution assembly if the cutting implement is to be used above the level of the supply assembly. A porous plug is used to regulate the flow of the sterilizing solution from the supply assembly. The supply assembly is removably connected to the distributor for easy replacement when empty while the distributor remains mounted on the cutting implement.

Accordingly the invention provides a cutting implement for cutting plants and supplying a sterilizing liquid to the cut surface on the plant comprising: a pair of cutter blades CUB and CAB pivotally connected together so that said blades close over each other in a shearing action to shear plants when closed; and dispensing means 11 for distributing the sterilizing solution onto said cutter blades which dispensing means is characterised by including a distributor 12 for distributing the liquid onto the cutter blades, a container 14 for holding the sterilizing liquid removably connected to said distributor, and a flow control porous plug 45 for regulating the liquid flow from said container to said distributor; said container defining a fluid chamber therein and a container discharge passage 41

therefrom; and said distributor defining a support surface 22 thereon adapted to seat against a portion of the cutting implement adjacent said cutting blades and defining a fluid flow passage 26 therethrough communicating with said discharge passage from said container.

These and other features and advantages of the invention will become more clearly understood upon consideration of the following detailed description and accompanying drawings wherein like characters of reference designate corresponding parts throughout the several view and in which:-

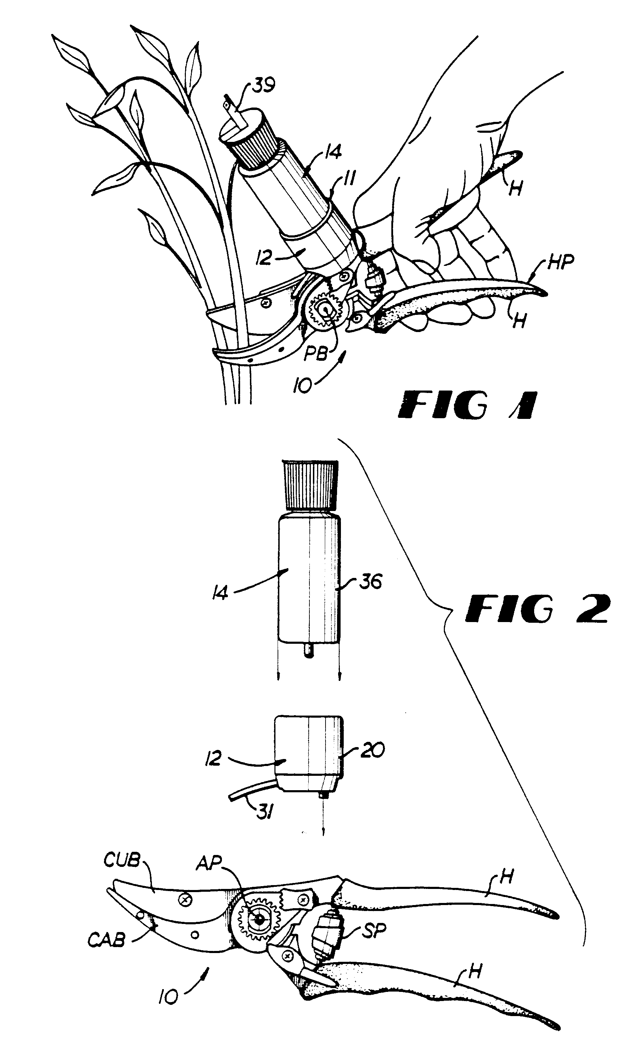

FIGURE 1 is a perspective view illustrating a preferred embodiment of the apparatus according to the invention in use;

FIGURE 2 is an exploded side view of the preferred embodiment of the invention seen in Figure 1;

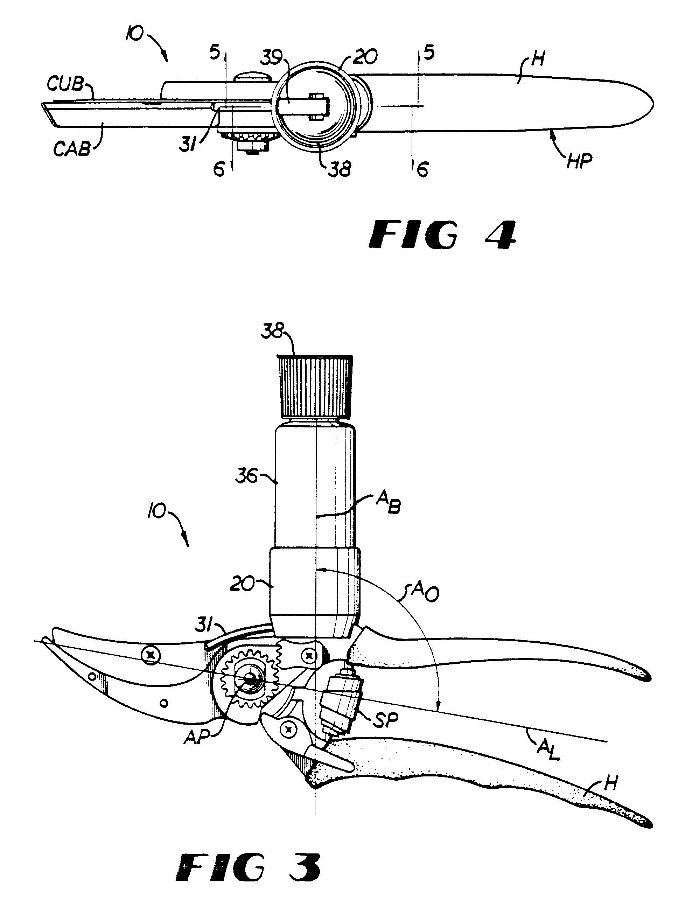

FIGURE 3 is a side view of the preferred embodiment of the invention assembled;

FIGURE 4 is a top plan view of the preferred embodiment of the invention;

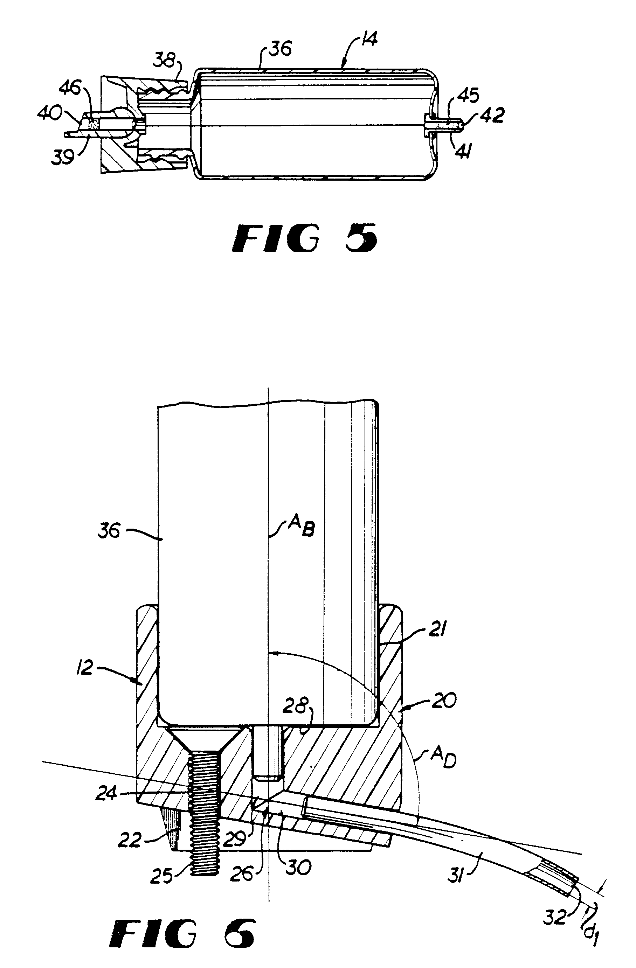

FIGURE 5 is an enlarged longitudinal cross-sectional view of the supply assembly taken generally along line 5-5 in Figure 4; and

FIGURE 6 is an enlarged longitudinal cross-sectional view of the distributor of the invention taken along line 6-6 in Figure 4.

These figures and the following detailed description disclose specific embodiments of the invention. However, it will be evident that various modifications are possible without departing from the scope of the invention as the same will now be understood by those skilled in the art and as defined in the appended claims.

## DETAILED DESCRIPTION OF ILLUSTRATIVE EMBODIMENTS

The apparatus of the invention is designed for use with any cutting implement used in the pruning and cutting of plants to distribute a sterilizing solution onto the cutting blade or blades of the cutting implement so that the sterilizing solution will coat those portions of the cutting blades coming in contact with a plant and also those portions of the plant being cut by the cutting implement.

Referring to the drawings, it will be seen that the invention is incorporated in a self-sterilizing pruning shear assembly 10. The assembly 10 includes a hand pruner HP which mounts thereon a liquid dispensing device 11 to dispense the sterilizing solution onto the pruner HP. The hand pruner HP has handles H pivoted together and adapted to be gripped in one of the user's hands and squeezed together. The pruner HP is provided with a concave anvil blade CAB and a convex cutting blade CVB mounted on the opposed handles H so that the blades CAB and CVB close on each other as they are pivoted on pivot bolt PB about their pivot axis $A_P$ when the handles H are squeezed together. The hand pruners HP are designed to be used with the blades CAB and CVB generally vertically oriented with the concave blade CAB generally below the convex blade CVB. The handles H are urged apart by spring SP.

The liquid dispensing device 11 includes a liquid distributor 12 for distributing the liquid onto the blades CAB and CVB and a liquid supply unit 14 connectable to the distributor 12 to supply liquid thereto. The liquid supply unit 14 can be replaced when empty or refilled in situ during use as will become more apparent.

The liquid distributor 12 includes a cylindrical body 20 mounted on the upper handle H (the handle attached to the anvil blade CAB) adjacent the pivot bolt PB. The body axis $A_B$ defines an offset angle $A_0$ with respect to the longitudinal axis $A_L$ of the hand pruner HP so that the body axis $A_B$ is generally upright during a majority of normal usage. Angle $A_0$ shown is about 100°. A cylindrical bore 21 is defined in the body 20 and opens upwardly therefrom. The bore 21 is concentric about axis $A_B$ and sized to receive the liquid supply unit 14 therein as will become more apparent. A handle receiving slot 22 is defined across the bottom of body 20 to receive handle H therein. The slot 22 is appropriately angled to locate body 20 with respect to the axis $A_L$. The body 20 also defines a mounting hole 24 therethrough from bore 21 to slot 22 and offset from axis $A_B$. A screw 25 extends through hole 24 and threadedly engages the handle H to hold body 20 in place. A discharge passage 26 extends from the center of the end surface 28 of bore 21 to the outside of the body 20. Passage 26 has an inner section 29 concentric of centerline $A_B$ which joins with an outer section 30 to the outside of the body 20. The outer section 30 is oriented at angle $A_D$ with respect to to axis $A_B$. A convenient angle $A_D$ is about 100°.

A discharge tube 31 is fixedly mounted in the outer section 30 of passage 26 and projects outwardly therefrom. The projecting end of the tube 31 curves downwardly as will become more apparent. The tube 31 has a discharge opening 32 of diameter $d_1$ as will become more apparent. The opening 32 is located on the blade side of the pivot bolt PB and rides against the inside surface of blade CVD so that the liquid discharged therefrom will run down the inside surface of blade CVD and also wet blade CAB as will become more apparent.

The liquid supply unit 14 includes a bottle 36 equipped with a screw-on cap 38. The cap 38 is provided with a flip-up spout 39 with a central opening 40 communicating with the interior of bottle 36 when raised. The bottom of bottle 36 has a discharge tube 41 projecting therefrom and defining an opening 42 therethrough. When the bottom of bottle 36 is inserted into the bore 21 in the body 30, the tube 41 projects down into the inner section 29 of passage 26 in body 20. Thus, any liquid flowing out of bottle 36 will flow out passage 26.

To control the flow of liquid out of the bottle 36, a flow regulator plug 45 is inserted in tube 41. When spout 39 is opened, the liquid will flow out of the bottle under the force of gravity with plug 45 regulating the flow rate. While various flow regulator plugs 45 may be used, porous plugs having an open cell pore structure have been found satisfactory. In particular, plastic porous plugs 45 with an open cell omnidirectional pore structure have been found satisfactory. The particular pore characteristics and size will depend on the liquid being used. For liquids such as alcohol and the like, a plug 45 with a 90-150 micron pore size, a diameter of about 0.125 inch (0,3175 cm) and a void fraction greater than about 35% has been found satisfactory. A good pore size is about 120 microns. This produces a flow rate of about 15-20 drops per minute.

A check valve may be placed in the spout opening 40 to prevent flow out of cap 38 if the assembly 10 is tipped. Alternatively a porous plug 46 may also be used to limit the liquid flow in that direction. Closing spout 39 serves to stop the liquid flos out of the discharge tube 41.

## Claims

1. A cutting implement for cutting plants and supplying a sterilizing liquid to the cut surface on the plant comprising: a pair of cutter blades (CUB and CAB) pivotally connected together so that said blades close over each other in a shearing action to shear plants when closed; and dispensing means (11) for distributing the sterilizing solution onto said cutter blades which dispensing means is characterised by including a distributor (12) for distributing the liquid onto the cutter blades, a container (14) for holding the sterilizing liquid removably connected to said distributor, and a flow control porous plug 45 for regulating the liquid flow from said container to said distributor; said container defining a fluid chamber therein and a container discharge passage (41) therefrom; and said distributor defining a support surface (22) thereon adapted to seat against a portion of the cutting implement adjacent said cutting blades and defining a fluid flow passage (26) therethrough communicating with said discharge passage from said container.

2. The cutting implement of claim 1 wherein said porous plug has a pore size of about 90-150 microns.

3. The cutting implement of claim 1 or claim 2 wherein said porous plug has a cross-sectional area of about 0.4 sq inch (0.1 sq cm).

4. The cutting implement according to one or more of the claims 1 to 3 wherein said porous plug has a void fraction of at least 35%.

5. The cutting implement according to one or more of the claims 1 to 4 wherein said container includes a cut-off valve (39) to stop the flow of liquid.

## Patentansprüche

1. Eine Schneidevorrichtung zum Beschneiden Von Pflanzen, die eine sterilisierende Flüssigkeit über die Schnittfläche der Pflanze verteilt, bestehend aus:

einem Paar drehbar miteinander verbundenen Schneidflächen (CUB und CAB), die im geschlossenen Zustand übereinanderliegen und dadurch Pflanzenteile abschneiden; und

einem Ausgabe-Mechanismus (11), der die sterilisierende Lösung auf die genannten Schneidflächen aufbringt, mit Verteiler (12), der die Flüssigkeit über die Schneidflächen verteilt, einem mit dem genannten Verteiler entfernbar verbundenen Behälter (14) für die sterilisierende Flüssigkeit und einem der Flußkontrolle dienenden porösen Pfropfen (45), der den Flüssigkeitsstrom vom genannten Ausgabe-Mechanismus zum genannten Verteiler reguliert; wobei der Ausgabe-Mechanismus aus einem Hohlraum für Flüssigkeit und einer daraus hervorragenden Ausfluß-Passage (41) besteht; und wobei der genannte Verteiler eine Stützfläche (22) besitzt, die auf einem Teil der Schneidevorrichtung neben den genannten Schneidflächen aufliegt und eine Durchflußröhre (26) enthält, die mit der genannten Ausfluß-Passage aus dem genannten Behälter in Verbindung steht.

2. Die Schneidevorrichtung nach Anspruch 1, wobei der genannte poröse Pfropfen eine Porengröße von etwa 90-150 Micron hat.

3. Die Schneidevorrichtung nach Anspruch 1 oder 2, wobei der genannte poröse Pfropfen einen Durchschnitt von etwa 1.0 cm$^2$ hat.

4. Die Schneidevorrichtung nach einem oder mehreren der Ansprüche 1 bis 3, wobei der genannte poröse Pfropfen eine Porenzahl von mindestens 35% hat.

**5.** Die Schneidevorrichtung nach einem oder mehreren der Ansprüche 1 bis 4, wobei der genannte Behälter mit einem Abschlußventil (39) versehen ist, das den Flüssigkeitsausfluß unterbrechen kann.

## Revendications

**1.** Outil de coupe destiné à couper des plantes et à appliquer un liquide stérilisant à la surface coupée sur la plante comportant :

deux lames de couteau (CUB et CAB) reliées de façon pivotante l'une à l'autre afin que lesdites lames se ferment l'une sur l'autre en une action de cisaillage pour cisailler des plantes lorsqu'elles sont fermées ;

un moyen (11) de distribution destiné à distribuer la solution stérilisante sur lesdites lames de couteau, comprenant un distributeur (12) destiné à distribuer le liquide sur les lames de couteau, un récipient (14) destiné à contenir le liquide stérilisé et raccordé de façon amovible au distributeur, et un bouchon poreux (45) de réglage d'écoulement destiné à réguler l'écoulement de liquide dudit récipient audit distributeur ; ledit récipient définissant intérieurement une chambre à fluide et un passage (41) de décharge du récipient qui en part ; et ledit distributeur définissant sur lui une surface (22) de support destinée à reposer contre une partie de l'outil de coupe adjacente auxdites lames de coupe et définissant à travers lui un passage (26) d'écoulement de fluide communiquant avec ledit passage de décharge partant dudit récipient.

**2.** Outil de coupe selon la revendication 1 dans lequel ledit bouchon poreux présente une dimension de pores d'environ 90-150 micromètres.

**3.** Outil de coupe selon la revendication 1 ou la revendication 2 dans lequel ledit bouchon poreux présente une aire en section transversale d'environ 0,4 square inch (1,0 centimètre carré).

**4.** Outil de coupe selon une ou plusieurs des revendications 1 à 3 dans lequel ledit bouchon poreux présente une fraction de vide d'au moins 35 %.

**5.** Outil de coupe selon une ou plusieurs des revendications 1 à 4 dans lequel ledit récipient comporte un robinet d'arrêt (39) destiné à arrêter l'écoulement de liquide.

FIG 1

FIG 2

FIG 4

FIG 3

FIG 5

FIG 6